# EUROPEAN PATENT SPECIFICATION

(11) **EP 2 984 940 B1**
(45) Date of publication and mention of the grant of the patent: **13.12.2017**
(21) Application number: 14782867.7
(22) Date of filing: 27.03.2014
(51) Int. Cl.: A23L 27/00, A23L 27/20, A23L 17/00, A23C 19/08, A23L 27/60, A23L 23/00

(54) **METHOD FOR REINFORCING SALTY TASTE OF FOOD**
VERFAHREN ZUR VERSTÄRKUNG DES SALZIGEN GESCHMACKS VON LEBENSMITTELN
PROCÉDÉ POUR RENFORCER UN GOÛT SALÉ D'ALIMENT

(30) Priority: 08.04.2013 JP 2013080665
(43) Date of publication of application: 17.02.2016
(73) Proprietor: Matsutani Chemical Industry Co., Ltd., Itami-shi, Hyogo 664-8508 (JP)
(72) Inventor: HATTORI, Ayako, Itami-shi Hyogo 664-8508 (JP); UCHIYAMA, Tomoko, Itami-shi Hyogo 664-8508 (JP); OKAZAKI, Tomokazu, Itami-shi Hyogo 664-8508 (JP)
(74) Representative: TBK
(86) International application number: PCT/JP2014/058873
(87) International publication number: WO 2014/168015

(56) References cited:
- WO-A1-2006/101118
- WO-A1-2008/059623
- JP-A- H01 157 356
- JP-A- H01 222 753
- JP-A- 2012 060 930
- US-A1- 2008 226 773
- US-A1- 2010 285 197
- US-A1- 2011 081 476
- US-A1- 2012 076 893

## Description

### Technical Field

The present invention relates to a method for enhancing the saltiness of a food or drink containing salt.

Specifically, the present invention relates to a method that adds a rare sugar to a food or drink containing a salt to bring out the saltiness of a food or drink, or a method that adds a rare sugar to a food or drink containing a salt and a cereal to further bring out the saltiness in synergy with masking the unpleasant grain odor.

### Background Art

Sodium chloride is a basic seasoning that imparts what are perceived as good tastes (particularly, saltiness) to a food or drink, has become indispensable to one's diet with its other usefulness including forming a wheat gluten network structure to improve expansibility and elasticity in bread and noodle making. The constituent sodium and chlorine are also essential to human body. Despite its usefulness, however, there is indication that sodium chloride, particularly excess sodium intake may cause cardiovascular diseases such as high-blood pressure, kidney disease, and heart disease. This has encouraged development of various products claiming to reduce salts.

However, simply reducing the sodium chloride content in a food or drink spoils the taste balance, and destroys the intended taste of the food or drink. For this reason, a low-salt food or drink has not been able to win full consumer support.

There have been attempts to complement saltiness with the use of alternative salts such as potassium chloride. However, alternative salts has a characteristic harsh taste not found in sodium chloride, and have made it difficult for consumers to be accustomed to the taste. Various attempts have been made to alleviate such a harsh taste (PTL 1 and PTL 2). There are also methods that are intended to provide a low-salt food or drink by using a technique that enhances saltiness without using alternative salts such as potassium chloride (PTL 3 to PTL 18).

However, the techniques of the related art use materials such as specific fatty acids, amino acids, organic acids, sugar alcohols, phosphates, oligosaccharides, protein decomposition products, and plant extracts, and the characteristic unpleasant flavors and astringency of these materials limit the range of applicable food or drink, reducing the utility of the methods.

### Citation List

### Patent Literature

PTL 1: JP-A-06-014742
PTL 2: JP-A-2008-289426
PTL 3: JP-A-5-184326
PTL 4: JP-A-2004-275097
PTL 5: JP-A-2002-345430
PTL 6: JP-A-10-66540
PTL 7: JP-A-2009-082070
PTL 8: JP-A-2008-099624
PTL 9: JP-A-2006-314235
PTL 10: JP-A-2010-075070
PTL 11: JP-A-2010-011807
PTL 12: JP-A-2008-054661
PTL 13: Domestic re-publication of PCT patent application 2008-120726
PTL 14: JP-A-2007-289182
PTL 15: JP-A-2009-148216
PTL 16: JP-A-07-289198
PTL 17: Domestic re-publication of PCT patent application 01-039613
PTL 18: JP-A-2006-296357
PTL 19: JP-A-2002-17392
PTL 20: WO2010/113785

### Non Patent Literature

NPL 1: Hideko Furukawa, Oishisa wo Hakaru -Shokuhin Kannou Kensa no Jissai, Saiwai Shobo, published November 1994, pp. 5 to 18.

### Summary of Invention

### Technical Problem

The present invention is intended to provide a method for more effectively improving the saltiness of a food or drink than methods of related art. The invention is also intended to provide a method for improving the saltiness of a food or drink containing a salt and a grain.

Specifically, it is an object of the present invention to provide a method for bringing out the saltiness of a food or drink containing a salt, or a method for further bringing out the saltiness of a food or drink containing a salt and a cereal in synergy with masking the unpleasant grain odor.

### Solution to Problem

The present inventors conducted intensive studies to solve the foregoing problems, and found an improvement over the saltiness improving methods of related art. Specifically, it was found that a rare sugar, preferably a rare sugar containing at least D-psicose can greatly enhance the saltiness of salts, particularly sodium chloride, contained in a food or drink, without imparting an off-taste or off-flavor. It was also found that the saltiness of a food or drink containing a cereal (for example, such as rice, wheat, corn, *soba,* bean, and starch, as will be described later) can be further enhanced in synergy with masking the powdery off-flavor characteristic of cereals. Another finding is that these effects can produce a desirable balance in the overall taste of a food or drink, including umami and savory flavor, particularly in a low-salt food or drink. The present invention was completed on the basis of these findings.

Specifically, the present invention is concerned with the following technical matters.

A first invention is a method for enhancing the saltiness of a food or drink containing a salt,
the method comprising adding a rare sugar to a raw material of the food or drink containing salt.

In a second invention according to the first invention, the method reduces the salt content in the food or drink containing the salt.

In a third invention according to the first invention, the method masks a grain odor due to a grain in a raw material of the food or drink that contains the grain as a part thereof and contains the salt.

In a fourth invention according to any one of the first to third inventions, the rare sugar is a rare sugar containing at least D-psicose.

In a fifth invention according to the fourth invention, the rare sugar containing at least D-psicose is a syrup.

In a sixth invention according to the fourth or fifth invention, the rare sugar containing at least D-psicose is produced from a raw material selected from fructose, isomerized sugar, glucose, and sucrose.

In a seventh invention according to any one of the fourth to sixth inventions, the rare sugar containing at least D-psicose contains 0.5 to 17.0% of D-psicose.

In an eighth invention according to any one of the first to seventh inventions, the salt is at least one selected from sodium chloride, potassium chloride, magnesium chloride, calcium chloride, sodium glutamate, and sodium succinate.

In a ninth invention according to any one of the fourth to eighth inventions, the rare sugar containing at least D-psicose is contained in 0.01 to 46 weight parts in terms of a solid content with respect to the total 100 weight parts of all raw materials of the food or drink containing the salt.

In a tenth invention according to any one of the fourth to ninth inventions, wherein a ratio A/B in the food or drink is 0.02 to 78, wherein the rare sugar is a rare sugar containing at least D-psicose, and a ratio A/B in the food or drink is 0.02 to 78, wherein A is a content of the rare sugar containing at least D-psicose (solid content, g/100 g) and B is a total content of Na, K, Ca, and Mg (g/ 100 g).

### Advantageous Effects of Invention

The present invention can enhance the saltiness of a food or drink containing a salt. A low-salt food or drink with claimed health benefits do not taste as good as intended because of the reduced saltiness and the skewed taste balance. The method of the present invention complements the salty taste of the low-salt food or drink to restore the skewed taste balance, and can provide a food or drink that maintain the intended good taste despite their low salt contents. In a food or drink containing cereal, the characteristic off-flavor of the grain often has adverse effect on the overall taste quality of the food or drink, and the unpleasant grain odor tends to stand out when the salt content of such a cereal-containing food or drink is reduced. The method of the present invention also has use in such a food or drink containing a cereal, and enables providing a grain odor-reduced food or drink that maintain the intended good taste with the complemented saltiness.

The saltiness enhancing effect in grain-containing food or drink is believed to be due to the synergy provided by the saltiness enhancer of the present invention masking the grain odor.

Food or drink materials such as wheat flour, corn starch, bran (wheat kernel), and rice bran have a characteristic grain flavor, which some people like as it can impart a roast flavor to a food or drink, but is typically considered undesirable because of the taste that is often described as "powdery" or "starchy", or having an off-flavor due to grains (a powdery, grassy, oxidized, or starchy flavor). The present invention provides a method for masking such a grain odor due to a grain in a food or drink which contains the grain as a part thereof and contains a salt.

### Brief Description of Drawings

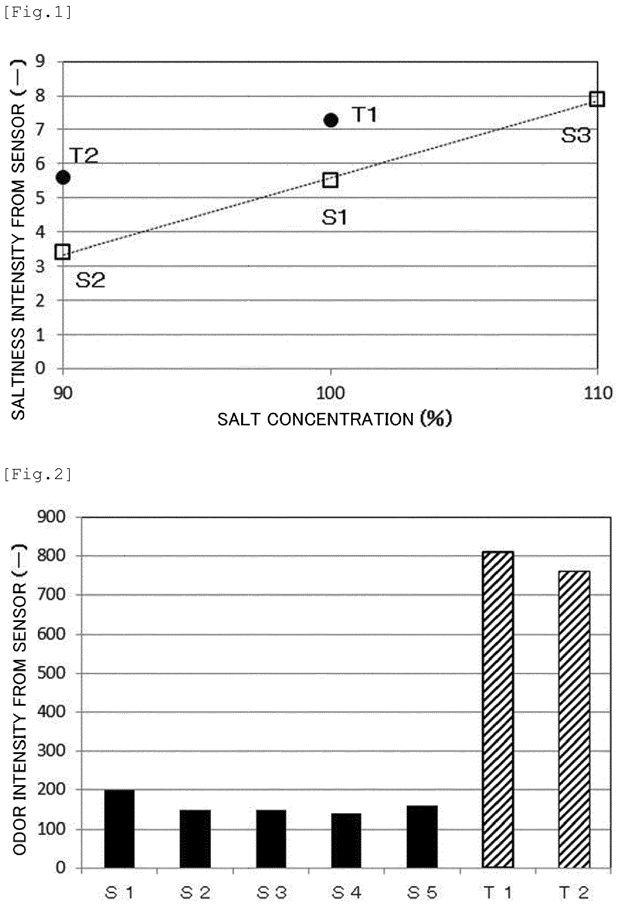

FIG. 1 represents the relationship between the salt concentration in a broiled chicken sauce (relative to the 100% salt concentration of Comparative Example 22 (S1)) and the saltiness intensity measured by a taste sensor, in which S1, S2, and S3 are samples containing no rare sugar-containing isomerized sugar, and T1 and T2 are samples containing a rare sugar-containing isomerized sugar.
FIG. 2 represents the results of the measurements of the volatile component in a broiled chicken sauce with an odor sensor, in which the vertical axis represents the intensity of the main odor component of the broiled chicken sauce measured by the sensor, S1 to S5 are samples containing no rare sugar-containing isomerized sugar, and T1 and T2 are samples containing a rare sugar-containing isomerized sugar.

### Description of Embodiments

As used herein, "salt" may be any salt used with the primary intent to impart saltiness to a food or drink. Examples include inorganic salts such as sodium chloride, magnesium chloride, calcium chloride, and potassium chloride, and organic salts such as sodium glutamate, and sodium succinate. Considering the effectiveness of imparting saltiness to a food or drink, it can be said that sodium chloride is the most typical of these salts.

Saltiness is perceived in the mouth upon eating or drinking a food or drink. Though receptors that are responsible for saltiness have not been fully understood, involvement of specific sodium (Na) ion channels in the taste bud cells on the tongue is most compelling. It is also widely known that K ions elicit bitterness and saltiness, and inorganic cations other than sodium are very likely to be also involved in saltiness.

Cations are believed to be responsible for the intensity the saltiness of salts, whereas the salt quality is likely to be of anion origin. Accordingly, in the present invention, the inorganic Na, K, Ca, and Mg ions contained in the salts represented above are defined as substances that are involved in the intensity of saltiness.

In accordance with the foregoing definition, "saltiness" as used herein refers to a taste that originates in the salts and/or the specific cations above, and the shape or form of the salts imparting the salty taste is not of concern. For example, the salts may be in the form of products containing high-purity sodium chloride, for example, such as a common salt, a purified salt, and a table salt, or products containing a mixture of salts from, for example, bittern, sea water or rocks . The salts also may be those contained in mixed seasonings that are typically prepared from the umami components or flavor components extracted from materials such as amino acids, organic acids, dried bonito, dried kelp, and shiitake mushroom, or spices.

As used herein, "grain odor" refers to off-flavors due to grains (e.g., a powdery, grassy, oxidized, or starchy flavor). The term "grain" as used herein typically means edible seeds containing starch as its main component (for example, rice, wheat, and corn), and "cereal" as used herein is a type of grain. The present invention defines grain and cereal as equivalent, and these are inclusive of not only edible seeds such as rice, wheat, and corn containing starch as its main component, but also non-seed materials such as edible root vegetables (stems, roots) and beans containing starch as its main component. The starch itself extracted from such seeds, stems, and roots also falls within the definition of grain and cereal.

As used herein, "rare sugars" are defined as particular types of monosaccharides (the basic sugar units with a total of 34 six-carbon monosaccharides (hexoses), of which 16 are aldoses, 8 are ketoses, and 10 are sugar alcohols), specifically monosaccharides (aldoses, ketoses), and derivatives thereof (sugar alcohols), that are found in much smaller quantities in nature than more abundant "natural monosaccharides" such as D-glucose (glucose). D-Glucose, D-galactose, D-mannose, D-ribose, D-xylose, and L-arabinose are six of the aldoses that are typically abundant in nature, whereas other aldoses are much less abundant, and are defined as rare sugars. Ketoses other than D-fructose can be classified as rare sugars. Examples of such rare ketoses include D-psicose, D-tagatose, D-sorbose, L-fructose, L-psicose, L-tagatose, and L-sorbose. Sugar alcohols can be produced through reduction of monosaccharides. D-Sorbitol is relatively abundant in nature, whereas other sugar alcohols are less abundant, and can be classified as rare sugars. Rare sugars occur in very small quantities. For example, D-allose is much less abundant than D-glucose (glucose).

At present, D-psicose and D-allose are two of the rare sugars that can be mass produced. D-Psicose is a hexose that exists as a D-form of ketohexose psicose. D-Allose is a hexose that exists as a D-form of aldose allose. D-Psicose can be obtained by using any means, including extraction from nature, and chemical or biological synthesis. D-Allose can be obtained from D-psicose in a D-psicose-containing solution acted upon by D-xylose isomerase (PTL 19). However, the method used to obtain D-allose is not limited to this, and D-allose may be obtained by using any means.

The rare sugar used in the present invention is appropriately selected from the foregoing rare sugars (for example, D-sorbose, D-tagatose, L-sorbose, D-psicose, D-allose, and D-altrose). It is particularly preferable to use the rare sugar in the form of a rare sugar-containing syrup. A rare sugar-containing syrup may be obtained by appropriately selecting a rare sugar (for example, D-sorbose, D-tagatose, L-sorbose, D-psicose, D-allose, D-altrose), and appropriately mixing it with a common syrup (liquid sugar). More easily, a commercially available product "Rare Sugar Sweet" (distributed by RareSweet; sold by Matsutani Chemical Industry Co., Ltd.) may be used as a rare sugar-containing syrup.

Rare Sugar Sweet is a syrup produced from a raw material isomerized sugar, and contains rare sugars obtained by using the technique disclosed in PTL 20. The rare sugars contained in this product are primarily D-psicose and D-allose. The rare sugars contained in the rare sugar-containing syrup obtained by using the technique of the foregoing publication are 0.5 to 17 mass% D-psicose, and 0.2 to 10 mass% D-allose with respect to all sugars. The syrup also contains unidentifiable rare sugars.

The method for obtaining the rare sugar-containing syrup is not limited to the foregoing technique. The term "rare sugar-containing syrup" encompasses a wide range of syrups containing various monosaccharides (including rare sugars) obtained by reacting monosaccharides (D-glucose or D-fructose) under alkali conditions in the Lobry de Bruyn-van Ekenstein transformation reaction or the retro aldol reaction first reported in late 19th century, followed by an aldol reaction (these reactions are referred to as alkali isomerization reactions). The raw material D-glucose and/or D-fructose are alkali isomerized until the D-glucose and/or D-fructose contents in the syrup become 55 to 99 mass%.

Of various methods available for rare sugar measurements, high-performance liquid chromatography is most commonly used for the separation and measurement of rare sugars. As an example, measurement may be performed under the conditions described in PTL 20 (detector: RI; column: Mitsubishi Kasei MCI GEL CK 08EC; column temperature: 80°C; mobile phase: purified water; mobile phase flow rate: 0.4 mL/min; sample injection amount: 10 µL).

Examples of raw materials used for the production of the rare sugar-containing syrup include starch, sucrose, isomerized sugar, fructose, and glucose. Isomerized sugar can be widely regarded as a mixed sugar that contains D-glucose and D-fructose as principal components in a specific composition ratio. Typically, isomerized sugar refers to liquid sugars containing glucose and fructose as main components, prepared by glucose isomerase- or alkali-catalyzed isomerization of a sugar solution of primarily glucose obtained by enzyme (e.g., amylase) or acid hydrolysis of starch. The JAS(Japanese Agricultural Standard) standards terms isomerized sugars as "glucose fructose liquid sugar" for sugars with the fructose content (the proportion of fructose in the sugar) of less than 50%, "fructose glucose liquid sugar" for sugars with the fructose content of 50% or more and less than 90%, "high fructose liquid sugar" for sugars with the fructose content of 90% or more, and "sucrose-mixed fructose glucose liquid sugar" for sugars obtained by adding sucrose to the glucose fructose liquid sugar in amounts that do not exceed the glucose fructose liquid sugar. The raw materials of the rare sugar-containing syrup used in the present invention may be any of such isomerized sugars.

For example, a rare sugar-containing syrup prepared from D-fructose contains 5.2% D-psicose, 1.8% D-allose, 15.0% glucose, and 69.3% D-fructose. A rare sugar-containing syrup prepared from isomerized sugar contains 3.7% D-psicose, 1.5% D-allose, 45.9% glucose, and 37.7% D-fructose. When the raw material is D-glucose, the product syrup contains 5.7% D-psicose, 2.7% D-allose, 47.4% glucose, and 32.1% D-fructose. However, the sugar composition depends on the raw material and the processing method used.

The method for improving the saltiness of a food or drink according to the present invention can exhibit the desired effect by adding a active-ingredient rare sugar containing at least D-psicose to a food or drink of interest. The target food or drink may be any food or drink, provided that at least the foregoing salts are contained.

In the method for improving the saltiness of a food or drink according to the present invention, the active-ingredient rare sugar containing at least D-psicose may be added to the food or drink at any stage from the preparation of raw material to the completion of the product, taking into account the composition and the intended use of the target food or drink. The rare sugar may be added by using known techniques such as mixing, kneading, dissolving, emulsifying, spraying, applying, attaching, atomizing, coating, injecting, and dipping. In some cases, the rare sugar containing at least D-psicose may be contained in the target food or drink by sprinkling the rare sugar at the completion of the food or drink or immediately before ingestion.

The rare sugars used in the present invention can be conveniently used in the form of a rare sugar-containing syrup produced by using known methods such as above. This is also economically desirable. For the purpose of meeting the object of the present invention, the rare sugar-containing syrup is typically used in 0.07 to 21 weight parts in terms of a solid content with respect to 100 weight parts of the target food or drink. The rare sugar-containing syrup also has use as a sweetener. The amount used thus depends on whether the syrup is used as a sweetener in a processed food. In the present invention, the amount of syrup also depends on the content of the rare sugar containing D-psicose. In order to bring out the desirable flavor from a cereal-containing food while improving the saltiness through masking of the grain odor of the food or drink, the rare sugar-containing syrup containing at least D-psicose is used in 0.01 to 46 weight parts in terms of a solid content with respect to 100 weight parts of the food or drink, though the amount depends on the content of the rare sugar containing D-psicose.

Specific examples of a food or drink to which the present invention is applicable include:
seasonings (including low-salt seasonings; for example, *miso,* soy sauce, table salt, seasoned salt, mayonnaise, dressing, broiled meat sauce, vinegar, *sanbaizu* (vinegar mixture), sushi vinegar, instant bouillon, soup powder, *tentsuyu* (dipping sauce for tempura), *mentsuyu* (dipping sauce for noodles), sauce, ketchup, curry roux, white roux, fishery product extracts, vegetable extracts, meat extracts, and mixed seasonings);
drinks (including low-salt drinks; for example, soft drinks such as vegetable juice, sports drink, and carbonated drink; soups such as *miso* soup, Chinese soup, potage, and minestrone; and dessert drinks such as red bean soup, shakes, and gelatinous drink);
preserved food products (including low-salt preserved food products; for example, pickled vegetables, and meat products such as ham; paste food such as *kamaboko*; dried fish products such as dried shredded squid, and dried fish with *mirin;* instant noodles, instant soups, canned food, bottled food, and various other retort food products);
baked products of wheat and other flours (including low-salt baked products of wheat and/or other flours; for example, bread, cookie, cracker, rice snacks, and snack sweets); and side dishes (cooked vegetables, meat, and fish, broiled food, fried food, steamed food, pilaf, rice ball, and vinegared rice, including side dishes using the seasonings exemplified above).
The invention is also applicable to, for example, dietary supplements, pet food, and cattle food.

### Examples

The following more specifically describes the present invention using Test Examples and Examples. It should be noted, however, that the present invention is not limited by the following.

In Examples, the commercially available product Rare Sugar Sweet (solid content of 70%, sugar composition: 44% glucose, 30% fructose, 15% D-psicose and all other rare sugars, 6% monosaccharides other than glucose, fructose, and rare sugars, and 5% oligosaccharides) was used as a rare sugar-containing syrup containing D-psicose. The Rare Sugar Sweet had a sweetness of 0.85 relative to the sweetness of sucrose, which has an index of 1. Accordingly, the Rare Sugar Sweet was used in 1.68 times the amount of sucrose for comparison.

As a control, an isomerized sugar (fructose glucose liquid sugar; Fujifruct H-100, Nihon Shokuhin Kako Co., Ltd.; solid content of 75%; 55% fructose, 45% glucose) was used. The isomerized sugar has the same level of sweetness as sucrose, and was used in 1.33 times the amount of sucrose for comparison, taking into account solely the water content.

### [Test Example 1]

### (Confirmation of Saltiness Enhancing Effect 1)

Brines were prepared in the mixture proportions shown in Table 1, and evaluated in a sensory evaluation. The saltiness was stronger in test groups 1 and 2 than in control group 1, with the test group 2 exhibiting a stronger salty taste.

**[Table 1]**

| Raw material | Control group 1 | Test group 1 | Test group 2 |
|---|---|---|---|
| Salt | 1.5 | 1.5 | 1.5 |
| Sucrose | 0.06 | - | - |
| Isomerized sugar | - | 0.08 | - |
| Rare Sugar Sweet | - | - | 0.1 |
| Water | Appropriate amount | Appropriate amount | Appropriate amount |
| Total (weight parts) | 100.0 | 100.0 | 100.0 |

### [Test Example 2]

### (Confirmation of Saltiness Enhancing Effect 2)

Brines were prepared in the mixture proportions shown in Table 2, and evaluated in a sensory evaluation. The saltiness was stronger in test groups 3 and 4 than in control group 2, with the test group 4 exhibiting a stronger salty taste.

**[Table 2]**

| Raw material | Control group 2 | Test group 3 | Test group 4 |
|---|---|---|---|
| Salt | 5.0 | 5.0 | 5.0 |
| Sucrose | 17.85 | - | - |
| Isomerized sugar | - | 23.8 | - |
| Rare Sugar Sweet | - | - | 30.0 |
| Water | Appropriate amount | Appropriate amount | Appropriate amount |
| Total (weight parts) | 100.0 | 100.0 | 100.0 |

### [Test Example 3]

### (Confirmation of Saltiness Enhancing Effect 3)

A suspension (100 g) prepared in the mixture proportions shown in Table 3 was put in a beaker, and heated to 90°C in a hot-water bath to obtain a starch paste solution. The starch paste solution was evaluated by 10 panelists in a sensory evaluation. The results are presented in Table 3.

The scores in the table represent the number of panelists who perceived a stronger sensation of saltiness than in control group 3.

Many panelists felt that the saltiness was stronger in test groups 5, 6, and 7 than in control group 3, and the saltiness enhancing effect was stronger than in the system of Test Example 1 which did not contain starch (the saltiness enhancing effect was shown to improve by small addition of a rare sugar-containing isomerized sugar). The saltiness enhancing effect improved as the amount of rare sugar-containing isomerized sugar was increased.

**[Table 3]**

| Raw material | Control group 3 | Test group 5 | Test group 6 | Test group 7 |
|---|---|---|---|---|
| Modified starch*¹ | 4.5 | 4.5 | 4.5 | 4.5 |
| Salt | 1.5 | 1.5 | 1.5 | 1.5 |
| Rare Sugar Sweet | - | 0.02 | 0.03 | 0.05 |
| Water | Appropriate amount | Appropriate amount | Appropriate amount | Appropriate amount |
| Total (weight parts) | 100.0 | 100.0 | 100.0 | 100.0 |
| | | | | |
| A/B*² | - | 0.024 | 0.036 | 0.060 |
| Number of panelists perceiving a stronger salty taste than in control group 3 | - | 3 | 7 | 10 |

| | | | | |
|---|---|---|---|---|
| *1 Pineace #1, Matsutani Chemical Industry Co., Ltd. *2 A mixed ratio of the content (solid content) A of Rare Sugar Sweet in weight parts and the total content B of Na, K, Ca, and Mg in weight parts. The total content of Na, K, Ca, and Mg is based on the total amount 39.14 g in 100 g of salt (see Standard Tables of Food Composition in Japan, Fifth Revised Edition; Resources Investigation Committees, Science and Technology Agency) | | | | |

### [Test Example 4]

### (Saltiness Enhancing Effect Test 4)

A suspension (100 g) prepared in the mixture proportions shown in Table 4 was put in a beaker, and heated to 90°C in a hot-water bath to obtain a starch paste solution. The starch paste solution was evaluated by 10 panelists in a sensory evaluation. The results are presented in Table 4.

The scores in the table represent the average point of saltiness (5 being the highest) rated relative to control group 4, which had the weakest saltiness with a score of 1.

The saltiness was the strongest in test group 9. Though the mixture proportion and the result are not shown in the table, the same test was conducted for test groups in which the content of Rare Sugar Sweet was varied to 65 weight parts (A/B = 77.5) or 70 weight parts (A/B = 83.5) from the mix used in test group 9. The saltiness was stronger when Rare Sugar Sweet was used in 65 weight parts than when other sweeteners (sucrose, isomerized sugar) were used, whereas the saltiness enhancing effect obtained with 70 weight parts of Rare Sugar Sweet was only comparable to that obtained with the isomerized sugar.

**[Table 4]**

| Raw material | Control group 4 | Test group 8 | Test group 9 |
|---|---|---|---|
| Modified starch*¹ | 4.5 | 4.5 | 4.5 |
| Salt | 1.5 | 1.5 | 1.5 |
| Sucrose | 35.7 | - | - |
| Isomerized sugar | - | 47.6 | - |
| Rare Sugar Sweet | - | - | 60.0 |
| Water | Appropriate amount | Appropriate amount | Appropriate amount |
| Total (weight parts) | 100.0 | 100.0 | 100.0 |
| | | | |
| A/B*² | - | - | 71.5 |
| Saltiness (average point) | 1.0 | 3.7 | 5.0 |

| | | | |
|---|---|---|---|
| *1 Pineace #1, Matsutani Chemical Industry Co., Ltd. *2 See *2 in Table 1 | | | |

### [Test Example 5]

### (Confirmation of Grain Odor Reducing Effect in Starch Paste Solution)

From the results of Test Examples 3 and 4 in which the saltiness enhancing effect was found to be stronger in the starch paste solution than in the aqueous solution, it was speculated that the saltiness enhancing effect might be the result of the synergy with the masking of the grain odor due to starch. This was tested by conducting the following experiment.

A suspension prepared in the mixture proportions shown in Table 5 was put in a beaker, and heated to 90°C in a hot-water bath to obtain a starch paste solution. The starch paste solution was evaluated in a sensory evaluation. For the experiment, an unmodified starch or a modified starch (hydroxypropylated phosphate-cross-linked starch) was used. The unmodified starch was of potato, corn, sago, non-glutinous rice, glutinous rice, tapioca, or wheat origin. The modified starch was of potato, corn, waxy corn, or tapioca origin. Samples with these 10 starches were compared and evaluated.

The grain odor of starch was more reduced in the starch paste solution of test group 10 than in control group 5, regardless of whether the unmodified starch or the modified starch was used, or what these starches were made from.

The results suggested that the saltiness enhancing effect by the rare sugar-containing isomerized sugar used in the starch paste solution might be the result of the synergy with the masking of the grain odor due to starch.

**[Table 5]**

| Raw material | Control group 5 | Test group 10 |
|---|---|---|
| Isomerized sugar | 3.97 | - |
| Rare Sugar Sweet | - | 5.0 |
| Starch (any of the above) | 5.0 | 5.0 |
| Water | Appropriate amount | Appropriate amount |
| Total (weight parts) | 100.0 | 100.0 |

### [Example 1]

### (Bean Paste)

A seasoning solution (100 g) prepared in the mixture proportions shown in Table 6 was put in a beaker, and heated to 90°C in a hot-water bath. The resulting bean paste was then evaluated in a sensory evaluation.

Compared to Comparative Example 1, the saltiness was stronger in Example 1 in which the rare sugar-containing isomerized sugar was used.

**[Table 6]**

| | Com. Ex. 1 | Ex. 1 |
|---|---|---|
| Soy sauce | 3.0 | 3.0 |
| Salt | 1.2 | 1.2 |
| Granulated flavored seasoning^{*1} | 0.7 | 0.7 |
| Rare Sugar Sweet | - | 0.2 |
| Modified starch^{*2} | 4.5 | 4.5 |
| Water | Appropriate amount | Appropriate amount |
| Total (weight parts) | 100.0 | 100.0 |

| | | |
|---|---|---|
| *1 Hondashi (Ajinomoto) *2 Pineace #1, Matsutani Chemical Industry Co., Ltd. | | |

### [Examples 2 to 4]

### (Tomato Sauce)

A seasoning solution (100 g) prepared in the mixture proportions shown in Table 7 was put in a beaker, and heated to 90°C in a hot-water bath. The resulting tomato sauce was then evaluated in a sensory evaluation.

By comparing Example 2 and Comparative Examples 2 and 3 of the same salt concentration and the same sweetness, the saltiness was stronger in the tomato sauce of Example 2 in which the rare sugar-containing isomerized sugar Rare Sugar Sweet was used than in Comparative Example 2 and Comparative Example 3 in which sucrose and isomerized sugar, respectively, were used.

Examples 3 and 4, despite the low salt content, had the same levels of saltiness as Comparative Examples 3 and 2, respectively.

The result confirmed that the rare sugar-containing isomerized sugar containing at least D-psicose can have the salt reduction effect in tomato sauce.

**[Table 7]**

| Raw material | Com. Ex. 2 | Com. Ex. 3 | Ex. 2 | Ex. 3 | Ex. 4 |
|---|---|---|---|---|---|
| Tomato paste | 11.0 | 11.0 | 11.0 | 11.0 | 11.0 |
| Sauteed onion | 2.5 | 2.5 | 2.5 | 2.5 | 2.5 |
| Sucrose | 1.5 | - | - | - | - |
| Isomerized sugar | - | 2.0 | - | - | - |
| Rare Sugar Sweet | - | - | 2.5 | 2.5 | 2.5 |
| Sodium glutamate | 0.5 | 0.5 | 0.5 | 0.5 | 0.5 |
| Olive oil | 2.0 | 2.0 | 2.0 | 2.0 | 2.0 |
| Consomate Chicken^{*1} | 1.0 | 1.0 | 1.0 | 1.0 | 1.0 |
| Paprika | 0.5 | 0.5 | 0.5 | 0.5 | 0.5 |
| Black pepper | 0.1 | 0.1 | 0.1 | 0.1 | 0.1 |
| Salt | 1.2 | 1.2 | 1.2 | 1.0 | 0.9 |
| Garlic | 0.35 | 0.35 | 0.35 | 0.35 | 0.35 |
| Citric acid | 0.1 | 0.1 | 0.1 | 0.1 | 0.1 |
| Modified starch^{*2} | 2.5 | 2.5 | 2.5 | 2.5 | 2.5 |
| Water | Appropriate amount | Appropriate amount | Appropriate amount | Appropriate amount | Appropriate amount |
| Total (weight parts) | 100.0 | 100.0 | 100.0 | 100.0 | 100.0 |

| | | | | | |
|---|---|---|---|---|---|
| *1 Fuji Foods Corporation product *2 Farinex VA70, Matsutani Chemical Industry Co., Ltd. | | | | | |

### [Examples5 to 7]

### (Sweet-Sour Pork Sauce)

A seasoning solution (100 g) prepared in the mixture proportions shown in Table 8 was put in a beaker, and heated to 90°C in a hot-water bath. The resulting sweet-sour pork sauce was then evaluated in a sensory evaluation.

By comparing Example 5 and Comparative Examples 4 and 5 of the same salt concentration and the same sweetness, the saltiness was stronger in Example 5 (rare sugar-containing isomerized sugar) than in Comparative Example 4 (sucrose) and in Comparative Example 5 (isomerized sugar).

Examples 6 and 7, despite the low salt content, had the same levels of saltiness as Comparative Examples 5 and 4, respectively.

The result confirmed that the rare sugar-containing isomerized sugar containing at least D-psicose can have the salt reduction effect in sweet-sour pork sauce.

**[Table 8]**

| Raw material | Com. Ex. 4 | Com. Ex. 5 | Ex. 5 | Ex. 6 | Ex. 7 |
|---|---|---|---|---|---|
| Tomato paste | 6.0 | 6.0 | 6.0 | 6.0 | 6.0 |
| Apple juice | 3.0 | 3.0 | 3.0 | 3.0 | 3.0 |
| Sucrose | 26.3 | | - | - | - |
| Isomerized sugar | - | 35.5 | - | - | - |
| Rare Sugar Sweet | - | - | 44.2 | 44.2 | 44.2 |
| Salt | 2.9 | 2.9 | 2.9 | 2.7 | 2.5 |
| Soy sauce | 11.0 | 11.0 | 11.0 | 11.0 | 11.0 |
| Cooking sake | 8.0 | 8.0 | 8.0 | 8.0 | 8.0 |
| Vinegar (10%) | 8.6 | 8.6 | 8.6 | 8.6 | 8.6 |
| Modified starch* | 3.2 | 3.2 | 3.2 | 3.2 | 3.2 |
| Water | Appropriate amount | Appropriate amount | Appropriate amount | Appropriate amount | Appropriate amount |
| Total (weight parts) | 100.0 | 100.0 | 100.0 | 100.0 | 100.0 |

| | | | | | |
|---|---|---|---|---|---|
| * Pineclear, Matsutani Chemical Industry Co., Ltd. | | | | | |

### [Examples 8 to 10]

### (Broiled Meat Sauce)

A seasoning solution (100 g) prepared in the mixture proportions shown in Table 9 was put in a beaker, and heated to 90°C in a hot-water bath. The resulting broiled meat sauce was then evaluated in a sensory evaluation.

By comparing Example 8 and Comparative Examples 6 and 7 of the same salt concentration and the same sweetness, the saltiness was stronger in Example 8 (rare sugar-containing isomerized sugar) than in Comparative Example 6 (sucrose) and in Comparative Example 7 (isomerized sugar).

Examples 9 and 10, despite the low salt content, had the same levels of saltiness as Comparative Examples 7 and 6, respectively.

The result confirmed that the rare sugar-containing isomerized sugar containing at least D-psicose can have the salt reduction effect in broiled meat sauce.

**[Table 9]**

| Raw material | Com. Ex. 6 | Com. Ex. 7 | Ex. 8 | Ex. 9 | Ex. 10 |
|---|---|---|---|---|---|
| Soy sauce | 20.0 | 20.0 | 20.0 | 20.0 | 20.0 |
| Apple juice | 25.0 | 25.0 | 25.0 | 25.0 | 25.0 |
| Sucrose | 10.0 | - | - | - | - |
| Isomerized sugar | - | 13.5 | - | - | - |
| Rare Sugar Sweet | - | - | 16.8 | 16.8 | 16.8 |
| Onion | 4.0 | 4.0 | 4.0 | 4.0 | 4.0 |
| Apple vinegar | 3.0 | 3.0 | 3.0 | 3.0 | 3.0 |
| White sesame | 2.0 | 2.0 | 2.0 | 2.0 | 2.0 |
| Soybean miso | 1.0 | 1.0 | 1.0 | 1.0 | 1.0 |
| Salt | 1.8 | 1.8 | 1.8 | 1.7 | 1.5 |
| Yeast extract*¹ | 0.5 | 0.5 | 0.5 | 0.5 | 0.5 |
| Garlic | 0.8 | 0.8 | 0.8 | 0.8 | 0.8 |
| Hop pepper | 0.1 | 0.1 | 0.1 | 0.1 | 0.1 |
| Sesame oil | 1.0 | 1.0 | 1.0 | 1.0 | 1.0 |
| Modified starch*² | 2.2 | 2.2 | 2.2 | 2.2 | 2.2 |
| Water | Appropriate amount | Appropriate amount | Appropriate amount | Appropriate amount | Appropriate amount |
| Total (weight parts) | 100.0 | 100.0 | 100.0 | 100.0 | 100.0 |

| | | | | | |
|---|---|---|---|---|---|
| *1 Vertex IG20, Fuji Foods Corporation *2 Pineace #1, Matsutani Chemical Industry Co., Ltd. | | | | | |

### [Examples 11 to 13]

### (Broiled Chicken Sauce)

A seasoning solution (100 g) prepared in the mixture proportions shown in Table 10 was put in a beaker, and heated to 90°C in a hot-water bath. The resulting broiled chicken sauce was evaluated by 10 panelists in a sensory evaluation. The results are presented in Table 10. The scores in the evaluation items "Sensation of soy sauce" and "Saltiness" in the table represent the average point of the scores evaluated by the 10 panelists in the scale of 1 to 5.
5: Very strong sensation
4: Strong sensation
3: Regular sensation
2: Weak sensation
1: Very weak sensation

By comparing Example 11 and Comparative Examples 8 and 9 of the same salt concentration and the same sweetness, the saltiness was stronger in Example 11 (rare sugar-containing isomerized sugar) than in Comparative Example 8 (sucrose) and in Comparative Example 9 (isomerized sugar).

Examples 12 and 13, despite the low salt content, had the same levels of saltiness as Comparative Examples 9 and 8, respectively.

The result confirmed that the rare sugar-containing isomerized sugar containing at least D-psicose can have the salt reduction effect in broiled chicken sauce.

**[Table 10]**

| Raw material | Com. Ex. 8 | Com. Ex. 9 | Ex. 11 | Ex. 12 | Ex. 13 |
|---|---|---|---|---|---|
| Soy sauce | 30.0 | 30.0 | 30.0 | 30.0 | 30.0 |
| Sucrose | 28.0 | - | - | - | - |
| Isomerized sugar | - | 40.5 | - | - | - |
| Rare Sugar Sweet | - | - | 47.1 | 47.1 | 47.1 |
| Salt | 1.0 | 1.0 | 1.0 | 0.8 | 0.0 |
| Modified starch* | 3.0 | 3.0 | 3.0 | 3.0 | 3.0 |
| Water | Appropriate amount | Appropriate amount | Appropriate amount | Appropriate amount | Appropriate amount |
| Total (weight parts) | 100.0 | 100.0 | 100.0 | 100.0 | 100.0 |
| Sensory Evaluation (average point) | | | | | |
| Sensation of soy sauce | 1.7 | 3.3 | 4.2 | 3.8 | 3.6 |
| Saltiness | 2.0 | 3.2 | 4.8 | 3.2 | 1.9 |

| | | | | | |
|---|---|---|---|---|---|
| * Pineace #1, Matsutani Chemical Industry Co., Ltd. | | | | | |

### [Examples 14 to 16]

### (Mitarashi Dango Sauce)

A seasoning solution (100 g) prepared in the mixture proportions shown in Table 11 was put in a beaker, and heated to 90°C in a hot-water bath. The resulting *mitarashi dango* sauce was evaluated by 10 panelists in a sensory evaluation. The results are presented in Table 11. The saltiness is rated as the average point of the scores evaluated by the 10 panelists in the scale of 1 to 5.
5: Very strong sensation
4: Strong sensation
3: Regular sensation
2: Weak sensation
1: Very weak sensation

By comparing Example 14 and Comparative Examples 10 and 11 of the same salt concentration and the same sweetness, the saltiness was stronger in Example 14 (rare sugar-containing isomerized sugar) than in Comparative Example 10 (sucrose) and in Comparative Example 11 (isomerized sugar).

Examples 15 and 16, despite the low soy sauce content, had the same levels of saltiness as Comparative Examples 11 and 10, respectively.

The result confirmed that the rare sugar-containing isomerized sugar containing at least D-psicose can have the salt reduction effect in *mitarashi dango* sauce.

**[Table 11]**

| Raw material | Com. Ex. 10 | Com. Ex. 11 | Ex. 14 | Ex. 15 | Ex. 16 |
|---|---|---|---|---|---|
| Sucrose | 35.0 | - | - | - | - |
| Isomerized sugar | - | 47.3 | - | - | - |
| Rare Sugar Sweet | - | - | 58.8 | 58.8 | 58.8 |
| Soy sauce | 12.0 | 12.0 | 12.0 | 10.8 | 10.2 |
| Modified starch* | 4.5 | 4.5 | 4.5 | 4.5 | 4.5 |
| Water | Appropriate amount | Appropriate amount | Appropriate amount | Appropriate amount | Appropriate amount |
| Total (weight parts) | 100.0 | 100.0 | 100.0 | 100.0 | 100.0 |
| Sensory Evaluation (average point) | | | | | |
| Saltiness | 2.0 | 3.3 | 4.5 | 3.3 | 2.0 |

| | | | | | |
|---|---|---|---|---|---|
| * Pineace #1, Matsutani Chemical Industry Co., Ltd. | | | | | |

### [Examples 17 and 18]

### (Kamaboko)

A frozen fish paste (Alaska pollock, SA grade) was mashed with a food cutter for 5 minutes, rubbed with added common salt for 15 minutes, and mashed with Rare Sugar Sweet or sucrose, and other additional materials for 15 minutes. The resulting meat paste was mounted on a plate, allowed to sit at 45°C for 45 minutes, and steamed at 90°C for 45 minutes to obtain *kamaboko.* The proportion of the added materials was shown in Table 12. The *kamaboko* was evaluated in a sensory evaluation. The saltiness was stronger in Example 17 (rare sugar-containing isomerized sugar) than in Comparative Example 12 (sucrose).

Example 18, despite the low salt content, had the same level of saltiness as Comparative Example 12.

The result confirmed that the rare sugar-containing isomerized sugar containing at least D-psicose can have the salt reduction effect in *kamaboko.*

**[Table 12]**

| Raw material | Com. Ex. 12 | Ex. 17 | Ex. 18 |
|---|---|---|---|
| Minced fish (Alaska pollock, SA grade) | 100.0 | 100.0 | 100.0 |
| Salt | 2.2 | 2.2 | 1.65 |
| Sucrose | 2.0 | - | - |
| Rare Sugar Sweet | - | 3.36 | 3.36 |
| Sodium glutamate | 0.7 | 0.7 | 0.7 |
| Seasoning (*Shinneriaji*) | 0.3 | 0.3 | 0.3 |
| *Mirin* | 2.0 | 2.0 | 2.0 |
| Potato starch | 2.5 | 2.5 | 2.5 |
| Egg white | 2.5 | 2.5 | 2.5 |
| Ice water | Appropriate amount | Appropriate amount | Appropriate amount |
| Total (weight parts) | 162.2 | 162.2 | 162.2 |

### [Example 19]

### (Cheese Food)

Raw materials other than Gouda cheese were mixed in the proportions shown in Table 13. After adding Gouda cheese, the mixture was agitated at 90°C for 5 minutes. After being agitated, the mixture was poured into a cup, molded, and wrapped. The cheese was stored in a refrigerator overnight, and evaluated on the next day in a sensory evaluation. The results are presented in Table 13. The scores in the evaluation items "Saltiness" and "Cheese flavor" in the table represent the average point of the scores evaluated by the 10 panelists in the scale of 1 to 5.
5: Very strong sensation
4: Strong sensation
3: Regular sensation
2: Weak sensation
1: Very weak sensation

The saltiness was stronger in Example 19 than in Comparative Examples 13 and 14.

**[Table 13]**

| Raw material | Com. Ex. 13 | Com. Ex. 14 | Ex. 19 |
|---|---|---|---|
| Gouda cheese | 53.0 | 51.0 | 51.0 |
| Sodium polyphosphate | 1.5 | 1.5 | 1.5 |
| Isomerized sugar | - | 2.0 | - |
| Rare Sugar Sweet | - | - | 2.5 |
| Modified starch* | 2.0 | 2.0 | 2.0 |
| Water | Appropriate amount | Appropriate amount | Appropriate amount |
| Total (weight parts) | 100.0 | 100.0 | 100.0 |
| Sensory Evaluation (average point) | | | |
| Saltiness | 3 | 4 | 5 |
| Cheese flavor | 3 | 2 | 5 |

| | | | |
|---|---|---|---|
| * Farinex VA70C, Matsutani Chemical Industry Co., Ltd. | | | |

### [Examples 20 to 22]

### (Lemon Dressing)

A dressing was prepared in the mixture proportions shown in Table 14, and evaluated in a sensory evaluation.

By comparing Example 20 and Comparative Examples 15 and 16 of the same salt concentration and the same sweetness, the saltiness was stronger in Example 20 than in Comparative Examples 15 and 16. Examples 21 and 22, despite the low salt content, had the same levels of saltiness as Comparative Examples 16 and 15, respectively.

The result confirmed that the rare sugar-containing isomerized sugar containing at least D-psicose can have the salt reduction effect in dressing.

**[Table 14]**

| Raw material | Com. Ex. 15 | Com. Ex. 16 | Ex. 20 | Ex. 21 | Ex. 22 |
|---|---|---|---|---|---|
| Lemon juice | 50.0 | 50.0 | 50.0 | 50.0 | 50.0 |
| Salt | 5.0 | 5.0 | 5.0 | 4.7 | 4.4 |
| Sodium glutamate | 0.25 | 0.25 | 0.25 | 0.25 | 0.25 |
| Sucrose | 17.0 | - | - | - | - |
| Isomerized sugar | - | 23.0 | - | - | - |
| Rare Sugar Sweet | - | - | 28.6 | 28.6 | 28.6 |
| Water | Appropriate amount | Appropriate amount | Appropriate amount | Appropriate amount | Appropriate amount |
| Total (weight parts) | 100.0 | 100.0 | 100.0 | 100.0 | 100.0 |

### [Example 23]

### (Chinese Soup)

A Chinese soup was prepared in the mixture proportions shown in Table 15, and evaluated in a sensory evaluation.

The saltiness was stronger in Example 23 than in Comparative Examples 17 and 18.

**[Table 15]**

| Raw material | Com. Ex. 17 | Com. Ex. 18 | Ex. 23 |
|---|---|---|---|
| Soy sauce | 3.0 | 3.0 | 3.0 |
| Chicken stock | 1.7 | 1.7 | 1.7 |
| Emulpork | 0.33 | 0.33 | 0.33 |
| Scallop granule | 0.33 | 0.33 | 0.33 |
| Yeast extract* | 0.33 | 0.33 | 0.33 |
| Salt | 0.1 | 0.1 | 0.1 |
| ginger | 0.58 | 0.58 | 0.58 |
| White pepper | 0.016 | 0.016 | 0.016 |
| Five-spice powder | 0.01 | 0.01 | 0.01 |
| Sesame oil | 0.25 | 0.25 | 0.25 |
| Sucrose | 2.0 | - | - |
| Isomerized sugar | - | 2.67 | - |
| Rare Sugar Sweet | - | - | 3.36 |
| Water | Appropriate amount | Appropriate amount | Appropriate amount |
| Total (weight parts) | 100.0 | 100.0 | 100.0 |

| | | | |
|---|---|---|---|
| * Vertex IG20, Fuji Food or drinks Corporation | | | |

### [Examples 24 to 25]

### (Sausage)

Frozen lean hog and lard were each ground with a chopper equipped with a 1.5 mm-mesh plate. The resulting ground meat was added into a food or drink cutter with sucrose or Rare Sugar Sweet, and other additional materials, and mixed into a paste while slowly adding ice water. The paste was deaerated with a vacuum desiccator, and filled into a collagen film casing using a stuffer. The paste was twisted at 6 to 8 cm intervals, tied with a kite string, and soused in a refrigerator for 1 day. The meat was then smoked at about 30°C for 40 minutes, steamed at 75°C for 40 minutes, and immediately cooled under running water to obtain a vienna sausage. The proportion of the added materials was shown in Table 16.

The sausage was boiled for 3 minutes, and evaluated in a sensory evaluation after allowing it cool. By comparing Example 24 and Comparative Example 19 of the same salt concentration and the same sweetness, the saltiness was stronger in Example 24 than in Comparative Example 19.

Example 25, despite the low salt content, had the same level of saltiness as Comparative Example 19.

The result confirmed that the rare sugar-containing isomerized sugar containing at least D-psicose can have the salt reduction effect in sausage.

**[Table 16]**

| Raw material | Com. Ex. 19 | Ex. 24 | Ex. 25 |
|---|---|---|---|
| Lean hog | 57.5 | 57.5 | 57.5 |
| Lard | 23.0 | 23.0 | 23.0 |
| Salt | 1.3 | 1.3 | 0.95 |
| Sucrose | 1.0 | - | - |
| Rare Sugar Sweet | - | 1.68 | 1.68 |
| Sodium glutamate | 0.5 | 0.5 | 0.5 |
| Mixed spice | 0.5 | 0.5 | 0.5 |
| Sodium polyphosphate | 0.2 | 0.2 | 0.2 |
| L-Ascorbic acid | 0.05 | 0.05 | 0.05 |
| Sodium nitrite | 0.006 | 0.006 | 0.006 |
| Ice water | Appropriate amount | Appropriate amount | Appropriate amount |
| Total (weight parts) | 100.0 | 100.0 | 100.0 |

### [Example 26]

### (Processed Cheese)

Raw materials other than Gouda cheese were mixed in the proportions shown in Table 17. After adding Gouda cheese, the mixture was agitated at 90°C for 5 minutes. After being agitated, the mixture was divided into about 7-g portions, and molded into a form of a candy. The cheese was stored in a refrigerator overnight, and evaluated on the next day in a sensory evaluation. The results of the sensory evaluation of the processed cheese are presented in Table 17.

The scores in the evaluation items "Saltiness" and "Cheese flavor" in the table represent the average point of the scores evaluated by the 10 panelists in the scale of 1 to 5.
5: Very strong sensation
4: Strong sensation
3: Regular sensation
2: Weak sensation
1: Very weak sensation

The saltiness was stronger in Example 26 than in Comparative Examples 20 and 21.

**[Table 17]**

| Raw material | Com. Ex. 20 | Com. Ex. 21 | Ex. 26 |
|---|---|---|---|
| Gouda cheese | 84.0 | 84.0 | 84.0 |
| Sodium polyphosphate | 1.2 | 1.2 | 1.2 |
| Isomerized sugar | - | 2.0 | - |
| Rare Sugar Sweet | - | - | 2.5 |
| Water | Appropriate amount | Appropriate amount | Appropriate amount |
| Total (weight parts) | 100.0 | 100.0 | 100.0 |
| Sensory Evaluation (average point) | | | |
| Saltiness | 3 | 4 | 5 |
| Cheese flavor | 3 | 2 | 5 |

### [Examples 27 to 28]

### (Broiled Chicken Sauce (2) - Sensory Evaluation)

A seasoning solution (100 g) prepared in the mixture proportions shown in Table 18 was put in a beaker, and heated to 90°C in a hot-water bath to obtain a broiled chicken sauce. The saltiness of the sauces of Examples 27 and 28 were then evaluated by 8 panelists (2 males, 6 females) relative to the sauce of Comparative Example 22 used as a reference.

The panelists were recruited from a group of testers who passed the five-taste identification test and the saltiness concentration difference test conducted in the manner described in Non Patent Literature 1. The panelists were asked to rate the saltiness sensation and the sauce flavor in the samples of Examples relative to the reference sample, as follows.

### (Saltiness Intensity)

5: Very strong sensation of saltiness
4: Strong sensation of saltiness
3: No difference from the saltiness of reference sample
2: Weak sensation of saltiness
1: Very weak sensation of saltiness

### (Sauce Flavor)

5: Very strong flavor of broiled chicken sauce
4: Strong flavor of broiled chicken sauce
3: No difference from the flavor of reference sample
2: Weak flavor of broiled chicken sauce
1: Very weak flavor of broiled chicken sauce

Table 19 presents mean values of the saltiness scores and the sauce flavor scores given by the panelists. As shown in Table 19, the panelists clearly felt a stronger sensation of saltiness in Example 27 than in the sauce of Comparative Example 22, which had the same salt concentration as Example 27 but did not contain the rare sugar-containing isomerized sugar containing at least D-psicose. The saltiness of the sauce of Example 28 containing the rare sugar-containing isomerized sugar containing at least D-psicose was rated as being comparable to or stronger than the saltiness of Comparative Example 22, despite that the salt used in Example 28 was 90% of the concentration used in Comparative Example. The panelists felt that the flavor of the broiled chicken sauce was stronger in Examples 27 and 28 than in Comparative Example 22. This result confirmed that the flavor of the broiled chicken sauce was enhanced by the rare sugar-containing isomerized sugar containing at least D-psicose in the sauce.

As a blind test, the panelists were asked to evaluate the samples of Examples 27 and 28 along with sample Z, the same sample used in Comparative Example 22. The significance of the test scores was then determined against the scores of sample Z. The saltiness score and the flavor score of Example 27 both had a p-value of p < 0.001, whereas p < 0.05 in the flavor score of Example 28. The saltiness and flavor scores of Example 27, and the flavor score of Example 28 were thus significantly different from sample Z (Comparative Example 22).

**[Table 18]**

| Raw material | Com. Ex. 22 (S1) | Ex. 27 (T1) | Ex. 28 (T2) |
|---|---|---|---|
| Soy sauce*¹ | 30.0 | 30.0 | 30.0 |
| Sucrose | 28.0 | 19.6 | 19.6 |
| Rare Sugar Sweet | - | 14.1 | 14.1 |
| Salt | 1.0 | 1.0 | 0.4 |
| Char-grill flavored seasoning*² | 0.7 | 0.7 | 0.7 |
| Char-broiled chicken paste*³ | 0.5 | 0.5 | 0.5 |
| Modified starch*⁴ | 3.0 | 3.0 | 3.0 |
| Water | Appropriate amount | Appropriate amount | Appropriate amount |
| Total (weight parts) | 100.0 | 100.0 | 100.0 |

| | | | |
|---|---|---|---|
| *1 Koikuchi Shoyu, Kikkoman (salt content, 13.3 mass%) *2 Char-grill flavored seasoning, Dai-Nippon Meiji Sugar (salt content, 15.8 mass%) *3 Char-broiled chicken paste, Dai-Nippon Meiji Sugar (salt content, 14.0 mass%) *4 Pineace #1, Matsutani Chemical Industry Co., Ltd. | | | |

**[Table 19]**

| | Com. Ex. 22 | Ex. 27 | Ex. 28 |
|---|---|---|---|
| Sauce salt concentration (%)*¹ | 5.17 | 5.17 | 4.57 |
| Saltiness score | (3) | 4.50 | 3.38 |
| Sauce flavor score | (3) | 4.12 | 3.88 |

| | | | |
|---|---|---|---|
| *1 Salt equivalent content of sauce component in mass% | | | |

### (Broiled Chicken Sauce (2) - Analysis by Taste Sensor)

The saltiness of the sauces of the Examples 27 and 28 was evaluated with an electronic taste tester α-Astree (Alpha-M.O.S.). Sauces were prepared in 90% (S2) and 110% (S3) of the salt concentration (S1) of the sauce of Comparative Example 22 by adjusting the content of the salt in the sauce S1. The output of the salt sensor was broken down into values of 0 to 12, using the sauces S1 to S3 as reference. The sauce of Example 27 (T1), and the sauce of Example 28 (T2) containing salt in 90% of the concentration (T1) were then measured.

A diluted solution (3 X) of each sauce was set in a designated beaker of the **α**-Astree tester, and measured with the taste sensor. The average of the measured values recorded between 100 to 120 seconds after the sensor readings stabilized was obtained as the taste sensor value.

FIG. 1 represents the sauce salt concentrations (percentages relative to the 100% salt concentration A1) against the saltiness intensity measured by the sensor. The taste sensor indicated that T1 containing the rare sugar-containing isomerized sugar containing at least D-psicose was about 1.3 times more salty than S1, despite that S1 and T1 had the same salt concentration. The sensor also showed that the saltiness of T2 containing the rare sugar-containing isomerized sugar containing at least D-psicose was the same or stronger than the saltiness of S1, despite that T2 contained salt in 90% of the concentration in S1.

As with the case of the sensory evaluation, the saltiness enhancing effect of the rare sugar-containing isomerized sugar contained in a food or drink according to the method of the present invention was also confirmed in the experiment using the taste sensor.

### (Broiled Chicken Sauce (2) - Analysis by Odor Sensor)

The odor of the sauces of Examples 27 and 28 was evaluated with an odor analyzer Heracles II (Alpha-M.O.S.). In addition to the sauces used in the evaluation with the taste sensor, sauces prepared in 90% (S4) and 110% (S5) of the sucrose in S1 were used in evaluation.

The analyzer has two columns, and enables detailed analysis of sample odor from the pattern difference in the chromatogram of each sample. The sauce was sealed in a sample vial container of the analyzer, and maintained at 60°C for 15 minutes. The volatile component in the sauce was then analyzed and measured by gas chromatography.

FIG. 2 is a chromatography profile showing peak areas of methylpyrazine, the main odor component of the sauce. As shown in the graph of FIG. 2, there was about a 4-fold difference in the methylpyrazine peak areas of the rare sugar-free sauces (S1 to S5) and the rare sugar-containing sauces (T1, T2), suggesting that the rare sugar promoted vaporization of the desirable odor component of the broiled chicken sauce. As with the case of the sensory evaluation, it was confirmed in experiments using the odor sensor that the method of the present invention can be used to bring out the desirable flavor of the grain-containing food or drink while reducing the gain odor due to grains.

### [Example 29]

### (Broiled Chicken Sauce (3))

A broiled chicken sauce (Example 29) was prepared by using D-psicose in place of the rare sugar-containing isomerized sugar containing at least D-psicose. Table 20 shows the mixture proportions of Example 29. Table 20 also shows Comparative Example 22 (Table 18) used as a reference sample. A seasoning solution (100 g) prepared in the mixture proportions shown in Table 20 was put in a beaker, and heated to 90°C in a hot-water bath to obtain a broiled chicken sauce.

The saltiness of the sauce of Example 29 was evaluated by 17 panelists (10 males, 7 females) relative to the sauce of Comparative Example 22. The evaluation was performed by using the same method used in the sensory evaluation of broiled chicken sauce (2).

Table 21 shows mean values of the saltiness scores given by the panelists. As shown in Table 21, the panelists clearly felt a stronger salty taste in the sauce of Example 29 containing the rare sugar D-psicose, despite that the salt concentrations were the same in Comparative Example 22 and Example 29. The significance of the saltiness score of Example 29 was determined as in the sensory evaluation of broiled chicken sauce (2). The p-value was p < 0.001, confirming that the saltiness score of Example 29 was significantly different from Comparative Example 22.

**[Table 20]**

| Raw material | Com. Ex. 22 | Ex. 29 |
|---|---|---|
| Soy sauce*¹ | 30.0 | 30.0 |
| Sucrose | 28.0 | 19.6 |
| D-Psicose | - | 12.0 |
| Salt | 1.0 | 1.0 |
| Char-grill flavored seasoning*² | 0.7 | 0.7 |
| Char-broiled chicken paste*³ | 0.5 | 0.5 |
| Modified starch*⁴ | 3.0 | 3.0 |
| Water | Appropriate amount | Appropriate amount |
| Total (weight parts) | 100.0 | 100.0 |

| | | |
|---|---|---|
| *1 Koikuchi Shoyu, Kikkoman (salt content, 13.3 mass%) *2 Char-grill flavored seasoning, Dai-Nippon Meiji Sugar (salt content, 15.8 mass%) *3 Char-broiled chicken paste, Dai-Nippon Meiji Sugar (salt content, 14.0 mass%) *4 Pineace #1, Matsutani Chemical Industry Co., Ltd. | | |

**[Table 21]**

| | Com. Ex. 22 (Reference sample) | Ex. 29 (D-Psicose) |
|---|---|---|
| Sauce salt concentration (%) | 5.17 | 5.17 |
| Saltiness score | (3) | 4.06 |

### [Example 30]

### (Potato Chips)

A snack seasoning (5 g) prepared in the mixture proportions shown in Table 22 was sprinkled over potato chips (100 g) to produce salted potato chips. The saltiness of the potato chips of Example 31 was then evaluated by 16 panelists (8 males, 8 females) relative to Comparative Example 25. The evaluation was performed by using the same method used in the sensory evaluation of broiled chicken sauce (2).

Table 23 shows mean values of the saltiness scores given by the panelists. The potato chips of Example 31 containing D-psicose had a higher saltiness score than the potato chips of Comparative Example 25. The saltiness enhancing effect by D-psicose was also confirmed in potato chips.

As a blind test, the panelists were asked to evaluate the sample of Example 31 along with sample Z, the same sample used in Comparative Example 25. The significance of the test score of Example 31 was then determined against the score of sample Z. The p-value was p < 0.05, confirming that the saltiness of Example 31 was significantly different from Comparative Example 25.

**[Table 22]**

| Raw material | Com. Ex. 25 | Ex. 31 |
|---|---|---|
| Salt | 54.9 | 54.9 |
| Sucrose | 5.0 | - |
| D-Psicose | - | 5.0 |
| Bonito extract powder*¹ | 35.0 | 35.0 |
| Chicken extract powder*² | 4.0 | 4.0 |
| Sodium glutamate | 1.0 | 1.0 |
| White pepper | 0.1 | 0.1 |
| Total (weight parts) | 100.0 | 100.0 |

| | | |
|---|---|---|
| *1 Bonito powder F-34, Yaizu Suisan Kagaku Industry *2 Chicken Exp. No. 25, Yaizu Suisan Kagaku Industry | | |

**[Table 23]**

| | Com. Ex. 25 (Reference sample) | Ex. 31 (D-Psicose) |
|---|---|---|
| Saltiness score | (3) | 4.25 |

### Industrial Applicability

Monosaccharides (rare sugars) that occur only in trace quantities in nature were found to have a novel property to enhance the saltiness of a food or drink containing a salt, and a novel use of such rare sugars was developed. The present invention uses a saltiness enhancer that contains a rare sugar that can be used as a sweetener, preferably D-psicose and/or D-allose. The saltiness enhancer is safe and easily ingestible, and can be used in a form that is not greatly different from common food or drink. The present invention can provide a low-salt food or drink that can maintain the intended good taste despite its low salt content. In a food or drink containing a cereal, the grain odor can be reduced while maintaining the saltiness and the intended good taste. The physiological effects of rare sugars D-psicose and D-allose have attracted interest in the last years. The food or drink using these rare sugars should therefore be advantageous in terms of not only taste quality improvements such as enhanced saltiness and reduced grain odor, but also from the standpoint of physiological effects. A recent development in rare sugar producing methods has enabled rare sugar production from large quantities of naturally occurring monosaccharides, and the present invention providing a novel use of such rare sugars has high potential in industry.

## Claims

1. A method for enhancing the saltiness of a food or drink containing a salt,
the method comprising adding a rare sugar to a raw material of the food or drink containing the salt.

2. The method according to claim 1, wherein the method reduces the salt content in the food or drink containing the salt.

3. The method according to claim 1, wherein the method masks a grain odor due to a grain in a raw material of the food or drink that contains the grain as a part thereof and contains the salt.

4. The method according to any one of claims 1 to 3, wherein the rare sugar is a rare sugar containing at least D-psicose.

5. The method according to claim 4, wherein the rare sugar containing at least D-psicose is a syrup.

6. The method according to claim 4 or 5, wherein the rare sugar containing at least D-psicose is produced from a raw material selected from fructose, isomerized sugar, glucose, and sucrose.

7. The method according to any one of claims 4 to 6, wherein the rare sugar containing at least D-psicose contains 0.5 to 17.0% of D-psicose.

8. The method according to any one of claims 1 to 7, wherein the salt is at least one selected from sodium chloride, potassium chloride, magnesium chloride, calcium chloride, sodium glutamate, and sodium succinate.

9. The method according to any one of claims 4 to 8, wherein the rare sugar containing at least D-psicose is contained in 0.01 to 46 parts by weight in terms of a solid content with respect to the total 100 parts by weight of all raw materials of the food or drink containing the salt.

10. The method according to any one of claims 4 to 9, wherein the rare sugar is a rare sugar containing at least D-psicose, and a ratio A/B in the food or drink is 0.02 to 78, wherein A is a content of the rare sugar containing at least D-psicose (solid content, g/100 g) and B is a total content of Na, K, Ca, and Mg (g/ 100 g).

## Patentansprüche

1. Verfahren für die Erhöhung der Salzigkeit eines Lebensmittels oder Getränks, das ein Salz enthält,
wobei das Verfahren die Zugabe eines seltenen Zuckers zu einem Rohmaterial des Lebensmittels oder Getränks, das das Salz enthält, umfasst.

2. Verfahren nach Anspruch 1, wobei das Verfahren den Salzgehalt in dem Lebensmittel oder Getränk, das das Salz enthält, reduziert.

3. Verfahren nach Anspruch 1, wobei das Verfahren einen Getreidegeruch aufgrund eines Getreides in einem Rohmaterial des Lebensmittels oder Getränks maskiert, das das Getreide als einen Teil davon enthält und das Salz enthält.

4. Verfahren nach einem der Ansprüche 1 bis 3, wobei der seltene Zucker ein seltener Zucker ist, der mindestens D-Psicose enthält.

5. Verfahren nach Anspruch 4, wobei der seltene Zucker, der mindestens D-Psicose enthält, ein Sirup ist.

6. Verfahren nach Anspruch 4 oder 5, wobei der seltene Zucker, der mindestens D-Psicose enthält, aus einem Rohmaterial hergestellt ist, das aus Fructose, isomerisiertem Zucker, Glucose und Saccharose ausgewählt ist.

7. Verfahren nach einem der Ansprüche 4 bis 6, wobei der seltene Zucker, der mindestens D-Psicose enthält, 0,5 bis 17,0% D-Psicose enthält.

8. Verfahren nach einem der Ansprüche 1 bis 7, wobei das Salz wenigstens eines ausgewählt aus Natriumchlorid, Kaliumchlorid, Magnesiumchlorid, Calciumchlorid, Natriumglutamat und Natriumsuccinat ist.

9. Verfahren nach einem der Ansprüche 4 bis 8, wobei der seltene Zucker, der mindestens D-Psicose enthält, zu 0,01 bis 46 Gewichtsteilen als ein Feststoffgehalt mit Bezug auf die gesamten 100 Gewichtsteile aller Rohmaterialien des Lebensmittels oder Getränks, das das Salz enthält, enthalten ist.

10. Verfahren nach einem der Ansprüche 4 bis 9, wobei der seltene Zucker ein seltener Zucker ist, der mindestens D-Psicose enthält, und ein Verhältnis A/B in dem Lebensmittel oder Getränk 0,02 bis 78 ist, wobei A ein Gehalt des seltenen Zuckers ist, der mindestens D-Psicose enthält (Feststoffgehalt, g/100 g), und B der Gesamtgehalt an Na, K, Ca und Mg (g/100 g) ist.

## Revendications

1. Procédé pour renforcer un goût salé d'aliment ou de boisson contenant un sel, ledit procédé comprenant l'addition d'un sucre rare à une matière première de l'aliment ou de la boisson contenant le sel.

2. Procédé selon la revendication 1, dans lequel le procédé réduit la teneur en sel dans l'aliment ou la boisson contenant le sel.

3. Procédé selon la revendication 1, dans lequel le procédé masque une odeur de grain due à un grain dans une matière première de l'aliment ou de la boisson qui contient le grain en tant que partie de celui-ci ou celle-ci et contient le sel.

4. Procédé selon l'une quelconque des revendications 1 à 3, dans lequel le sucre rare est un sucre rare contenant au moins du D-psicose.

5. Procédé selon la revendication 4, dans lequel le sucre rare contenant au moins du D-psicose est un sirop.

6. Procédé selon la revendication 4 ou 5, dans lequel le sucre rare contenant au moins du D-psicose est produit à partir d'une matière première choisie parmi le fructose, le sucre isomérisé, le glucose et le saccharose.

7. Procédé selon l'une quelconque des revendications 4 à 6, dans lequel le sucre rare contenant au moins du D-psicose contient 0,5 à 17,0 % de D-psicose.

8. Procédé selon l'une quelconque des revendications 1 à 7, dans lequel le sel est au moins un sel choisi parmi le chlorure de sodium, le chlorure de potassium, le chlorure de magnésium, le chlorure de calcium, le glutamate de sodium et le succinate de sodium.

9. Procédé selon l'une quelconque des revendications 4 à 8, dans lequel le sucre rare contenant au moins du D-psicose est présent en 0,01 à 46 parties en poids en termes de teneur en solides par rapport aux 100 parties totales en poids de toutes les matières premières de l'aliment ou de la boisson contenant le sel.

10. Procédé selon l'une quelconque des revendications 4 à 9, dans lequel le sucre rare est un sucre rare contenant au moins du D-psicose, et un rapport A/B dans l'aliment ou la boisson est de 0,02 à 78, dans lequel A est une teneur du sucre rare contenant au moins du D-psicose (teneur en solides, g/100 g) et B est une teneur totale en Na, K, Ca et Mg (g/100 g).
